# EUROPÄISCHE PATENTANMELDUNG

(11) **EP 1 557 638 A1**
(43) Veröffentlichungstag der Anmeldung: **27.07.2005**
(21) Anmeldenummer: 04026389.9
(22) Anmeldetag: 06.11.2004
(51) Int. Cl.: G01B 5/207, G01B 5/28, G01L 5/04, B21B 38/02

(54) **Planheitsmessrolle**

(30) Priorität: 24.01.2004 DE 102004003676
(71) Anmelder: BWG BERGWERK- UND WALZWERK-MASCHINENBAU GMBH, D-47051 Duisburg (DE)
(72) Erfinder: Noé, Andreas, 47647 Kerken (DE)
(74) Vertreter: Honke, Manfred, Dr.-Ing.

(57) **Zusammenfassung**

Es handelt sich um eine Planheitsmessrolle zur Ermittlung von Planheitsmessfehlern in Bändern, mit unter Bildung von Messstellenbereichen in den Rollenmantel integrierten Kraftmess-Sensoren (5) und mit der Rollenoberfläche fluchtenden Abdeckungen (6a) für die Kraftmess-Sensoren. Die Messstellenbereiche sind von einer oder mehreren mit der Rollenoberfläche adhäsiv verbundenen Metallfolien (11) abgedeckt. Die bevorzugt aus Federstahl mit ca. 50 µm Dicke bestehenden Metallfolien werden dabei mit der Rolle verklebt oder verschweisst. Ferner kann die Planheitsmessrolle zusätzlich eine Ummantelung aus beispielsweise Hartmetall oder Kunststoff aufweisen, die sich infolge der Metallfolienabdeckung der Messstellenbereiche durch erhöhte Dauerfestigkeit auszeichnet.

## Beschreibung

Die Erfindung betrifft eine Planheitsmessrolle zur Ermittlung von Planheitsfehlern in Bändern, insbesondere Stahl- und Metallbändern, beim Durchlaufen von Bandprozesslinien oder Walzwerken, mit unter Bildung von Messstellenbereichen in den Rollenmantel integrierten Kraftmess-Sensoren und mit der Rollenoberfläche fluchtenden Abdeckungen für die Kraftmess-Sensoren, wobei die Abdeckungen unter Bildung eines Bewegungsspiels gegen die Kraftmess-Sensoren von einem Bewegungsspalt umgeben sind.

Es sind derartige Planheitsmessrollen bekannt, bei denen die Kraftmess-Sensoren unter Bildung singulärer Messstellenbereiche in radialer Richtung auf die Messrollenachse angeordnet sind, und zwar unter Bildung eines freien, ringförmigen Bewegungsspaltes zwischen der Außenfläche ihrer Abdeckung und der Innenfläche einer Ausnehmung in dem Rollenmantel, in der sie untergebracht sind (vgl. EP 0 595 072 A1). Der ringförmige Bewegungsspalt kann mittels eines O-Ringes oder einer Kunststoffschicht verschlossen sein, um das Eindringen von Schmutzpartikeln zu verhindern, mit denen die Bänder häufig auf ihrer Bandoberfläche belegt sind. Bei diesen Schmutzpartikeln kann es sich beispielsweise um Bandabrieb handeln, im Falle verzinkter Bänder um Zinkpartikel usw. Es besteht dennoch die Gefahr, dass sich Schmutzpartikel in den Bewegungsspalt hineinsetzen und im Wege einer Rollenumdrehung einen unerwünschten Abdruck auf der Bandoberfläche verursachen. Um eine Beschädigung der Bandoberfläche zu vermeiden, ist es bekannt, die Messrolle und folglich ihre Messstellenbereiche mit einer Ummantelung zu versehen. Dabei kann die Ummantelung aus mehreren rohrförmigen Abschnitten bestehen oder sich auf einem Trägerrohr befinden. Im letzteren Fall handelt es sich um eine thermisch aufgespritzte Ummantelung, wenn diese Ummantelung aus verschleißfähigen Metallen besteht (vgl. DE 298 24 236 U1). Es ist aber auch eine Gummibeschichtung oder Kunststoffbeschichtung, z. B. PU-Beschichtung bei Planheitsmessrollen bekannt, um zu vermeiden, dass sich Schmutzpartikel in den Bewegungsspalten der Abdeckungen für die Messkraft-Sensoren festsetzen. Die Wahl der geeigneten Beschichtung bzw. Ummantelung erfolgt je nach Anwendungsfall. Im Falle von beispielsweise Aluminiumund Edelstahlbändern wird regelmäßig eine Gummi- oder Kunststoffbeschichtung eingesetzt, um die Oberfläche des betreffenden Bandes besonders zu schonen. Bei Kohlenstoffbändern dagegen wird häufig mit Hartbeschichtungen gearbeitet, bei elektrolytisch verzinkten Bändern dagegen wiederum bevorzugt mit einer Kunststoffbeschichtung. Wenn man als Ummantelung eine Hartbeschichtung aus verschleißfähigen Metallen unmittelbar auf die Planheitsmessrolle aufträgt, besteht die Gefahr, dass im Bereich der unter dieser Ummantelung liegenden Bewegungsspalte die Hartbeschichtung aufgrund von Mikrobewegungen der Abdeckungen der Kraftmess-Sensoren zur Rissbildung neigt. Denn eine radiale Einfederung von 1 µm bis 2 µm durch die Messkraft bei einem Spalt von beispielsweise 20 µm bedeutet 5 bis 10 % Scherverformung. Eine solche Scherverformung kann eine Hartbeschichtung nicht lange aufnehmen. Wenn man dagegen die Planheitsmessrolle mit einem Trägerrohr ummantelt und darauf die Hartbeschichtung als Ummantelung aufträgt, werden zwar unzulässige Verformungen vermieden, jedoch stört dann der Kraftnebenschluss über das Trägerrohr, so dass die Messsignale negativ beeinflusst werden. - Hier will die Erfindung Abhilfe schaffen.

Der Erfindung liegt die Aufgabe zugrunde, eine Planheitsmessrolle der eingangs beschriebenen Ausführungsform zu schaffen, bei welcher sich selbst eine unmittelbar aufgebrachte Hartbeschichtung unter Verzicht auf ein Trägerrohr durch extrem hohe Dauerfestigkeit und folglich lange Lebensdauer auszeichnet.

Diese Aufgabe löst die Erfindung bei einer gattungsgemäßen Planheitsmessrolle dadurch, dass die Messstellenbereiche von einer oder mehreren mit der Rollenoberfläche adhäsiv verbundenen Metallfolie abgedeckt sind. - Diese Maßnahmen der Erfindung haben zur Folge, dass die unmittelbar auf die Messrolle aufgebrachte Ummantelung bzw. Umschichtung - gleichgültig, ob es sich um eine Hartbeschichtung oder Weichbeschichtung handelt - nicht länger im Bereich der die Abdeckungen für die Kraftmess-Sensoren umgebenden Bewegungsspalte einer störenden Scherverformung unterworfen wird. Denn eine solche Scherverformung wird selbst bei einer radialen Einfederung der Beschichtung durch die die Messstellenbereiche überdeckenden Metallfolien vermieden. Anders als ein Trägerrohr resultiert aus solchen gleichsam membranartigen Metallfolien kein störender Kraftnebenschluss, so dass die Messsignale nahezu keine Veränderungen erfahren. Das gilt nicht nur für ringförmige Messstellenbereiche mit zur Rollenhauptachse radial ausgerichteten Messkraft-Sensoren nach EP 0 595 072 A1, sondern auch dann, wenn die Messstellenbereiche von Messbalken auf zwei Stützen gebildet werden, und einerseits die Messbalken von einem Bewegungsspalt umgeben sind, andererseits die Stützen von Kraftmess-Sensoren gebildet werden, die nicht radial auf die Rollenhauptachse ausgerichtet sind (vgl. DE 102 24 938 A1).

Weitere erfindungswesentliche Maßnahmen sind im Folgenden aufgeführt, so können die Messstellenbereiche einzeln von jeweils einer Metallfolie abgedeckt sein. Es besteht aber auch die Möglichkeit, mehrere Messstellenbereiche gemeinsam von einer einzigen Metallfolie abzudecken. So kann beispielsweise die Metallfolie zum Abdecken von einem oder mehreren Messstellenbereichen als Folienstreifen quer über die gesamte Messrollenbreite verlaufen.

Weiter lehrt die Erfindung, dass die Messfolie aus Federstahl besteht. Die Dicke der Messfolie kann 10 µm bis 100 µm, vorzugsweise 50 µm betragen. Die Metallfolie bzw. -folien können mit der Metalloberfläche verklebt sein. Es besteht aber auch die Möglichkeit, die Metallfolie bzw. -folien mit der Rollenoberfläche zu verschweißen.

Im Rahmen der Erfindung kann die Planheitsmessrolle in an sich bekannter Weise nicht nur eine Ummantelung aus einem Hartmetall, z. B. Hartchrom oder Wolframcarbid aufweisen, sondern auch aus Gummi oder Kunststoff, z. B. Polyurethan.

Im Folgenden wird die Erfindung anhand einer lediglich ein Ausführungsbeispiel darstellenden Zeichnung näher erläutert. Es zeigen:
- Fig. 1: eine Planheitsmessrolle in schematischer Draufsicht ohne Ummantelung,
- Fig. 2: einen Radialschnitt durch den Gegenstand nach Fig. 1 im Bereich eines Kraftmess-Sensors,
- Fig. 3: einen Schnitt A-A durch den Gegenstand nach Fig. 1 über die Länge eines Messbalkens,
- Fig. 4: eine abgewandelte Ausführungsform des Gegenstandes nach Fig. 1,
- Fig. 5: eine weitere abgewandelte Ausführungsform des Gegenstandes nach Fig. 1,
- Fig. 6: den Gegenstand nach Fig. 1 mit einer Ummantelung aus Hartmetall,
- Fig. 7: einen Schnitt B-B im Bereich eines Messbalkens nach Fig. 6 und
- Fig. 8: einen Radialschnitt durch den Gegenstand nach Fig. 6 im Bereich eines Kraftmess-Sensors.

In den Figuren ist eine Planheitsmessrolle 1 zur Ermittlung von Planheitsfehlern in Bändern 2, insbesondere Stahl- und Metallbändern dargestellt, welche beispielsweise Bandprozesslinien oder Walzwerke durchlaufen. Diese Planheitsmessrolle 1 weist unter Bildung von Messstellenbereichen 3 in den Rollenmantel 4 integrierte bzw. versenkte Kraftmess-Sensoren 5 und mit der Rollenoberfläche fluchtende Abdeckungen 6a, 6b für diese Kraftmess-Sensoren 5 auf, wobei die Abdeckungen 6a, 6b unter Bildung eines Bewegungsspiels gegen die Kraftmess-Sensoren 5 von einem Bewegungsspalt 7 umgeben sind. Dieser Bewegungsspalt 7 kann von einem dauerelastischen Kunststoffkleber 8 ausgefüllt sein, um die Planheitsmessrolle abzudichten, so dass z. B. im Nasseinsatz einer solchen Planheitsmessrolle 1 keine Flüssigkeit in den Bereich der Kraftmess-Sensoren 5 eindringen kann. Ferner können die Bewegungsspalte 7 mittels eines umlaufenden O-Ringes 8a zusätzlich abgedichtet sein.

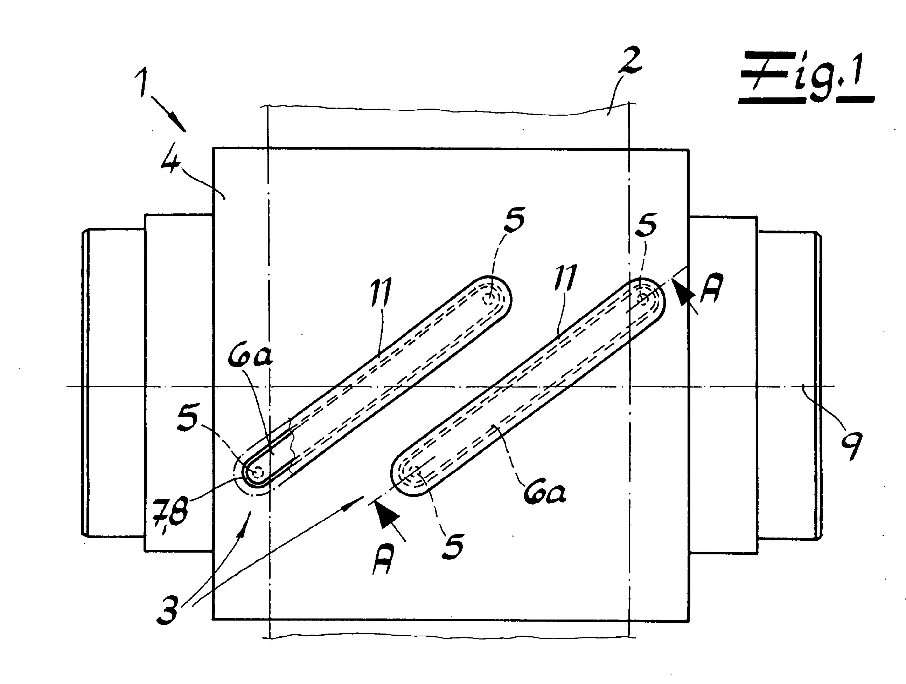

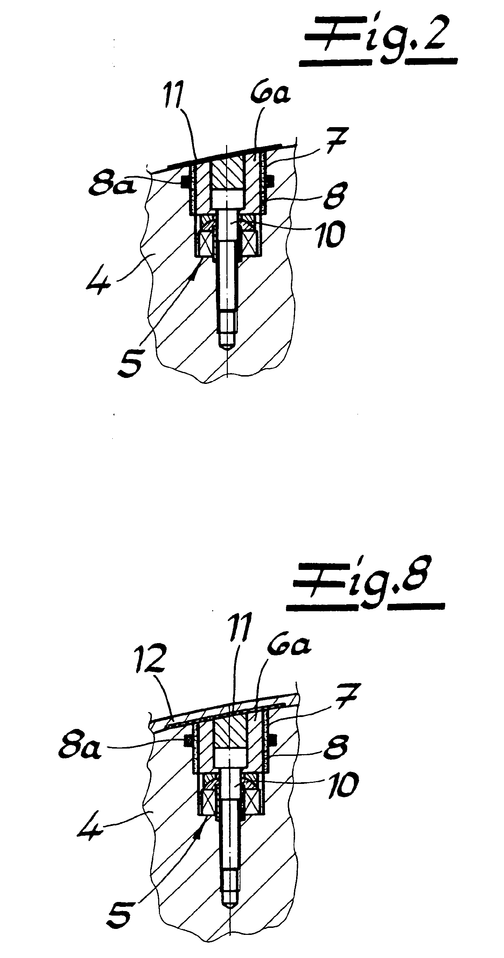

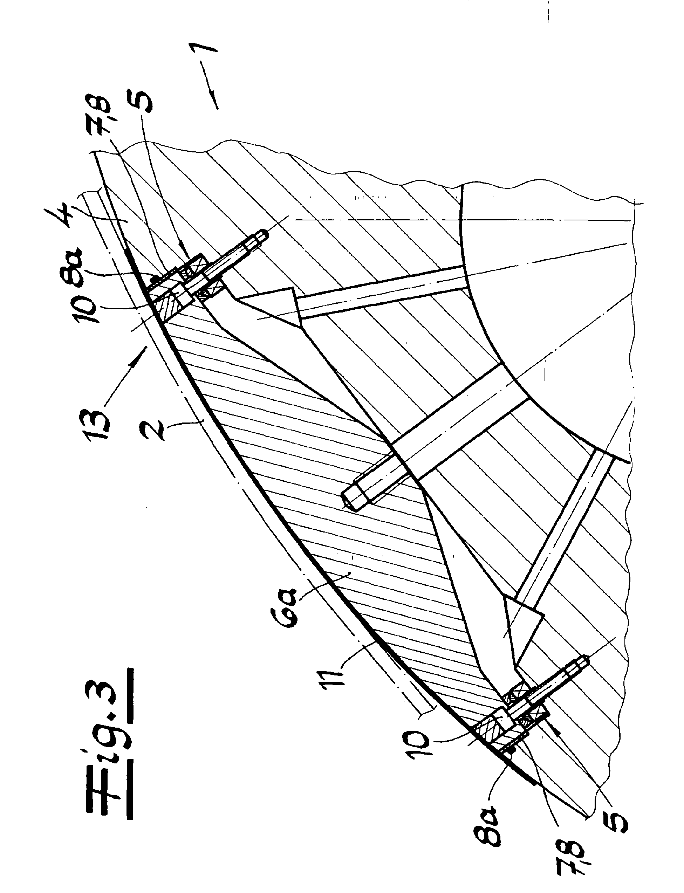

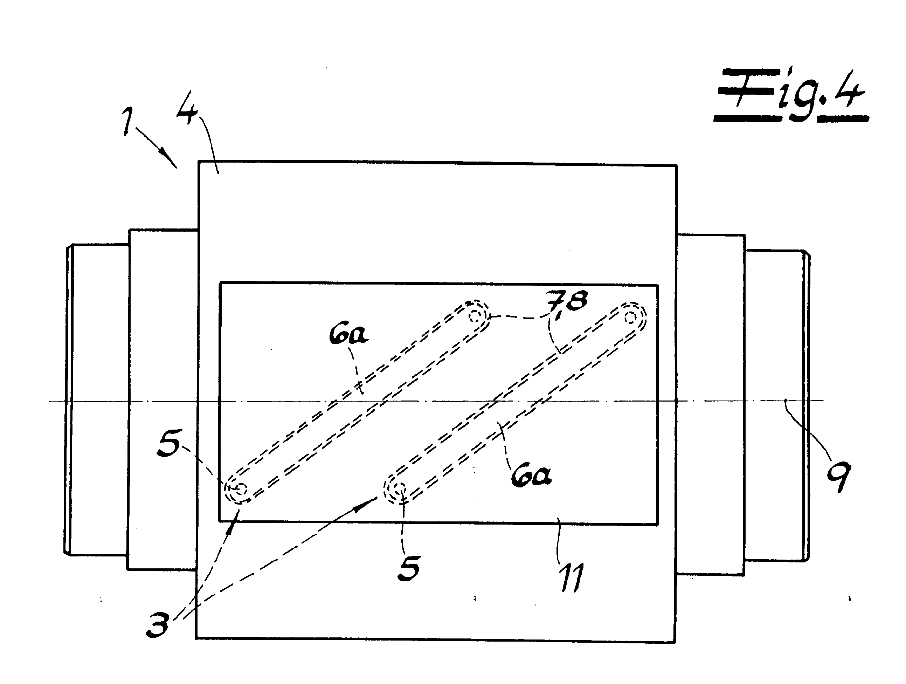

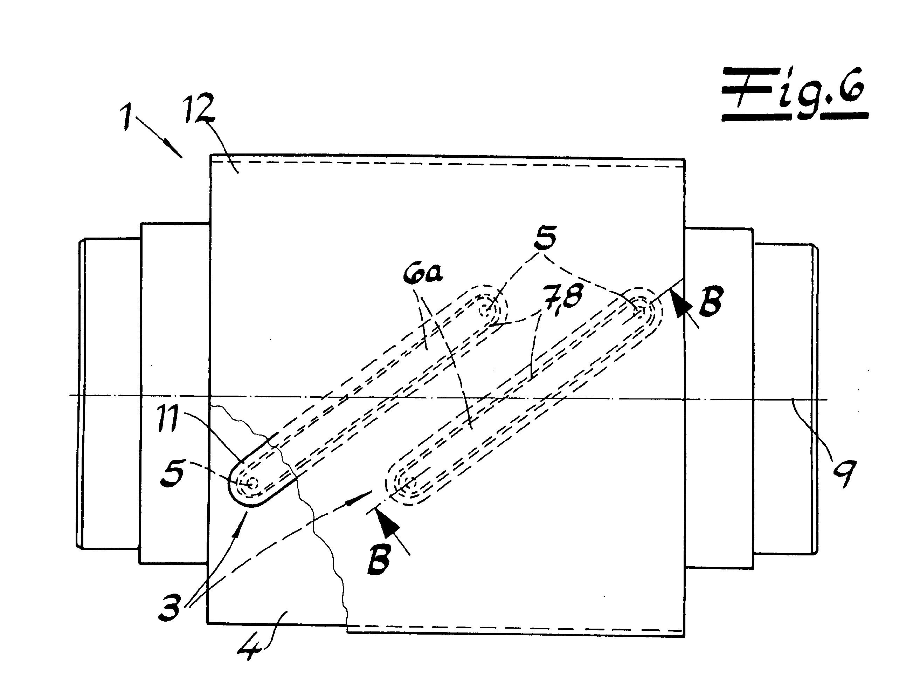

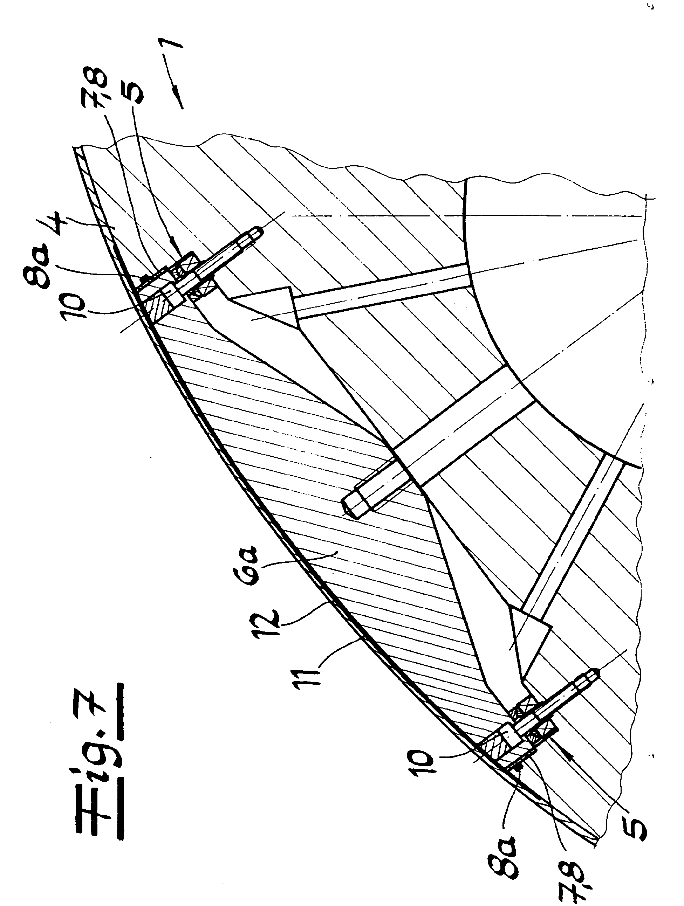

Bei den Ausführungsformen nach den Fig. 1 bis 4 und 6 bis 8 sind Messbalken 6a als Abdeckung in Schrägstellung zur Rollenhauptachse 9 eingesetzt, die sich in Bandlaufrichtung überlappen können und deren Oberfläche die Krümmung der Rollenoberfläche aufweisen. Diese Messbalken 6a sind beidseitig auf Kraftmess-Sensoren 5 (Balken auf zwei Stützen) abgestützt, wobei die Kraftmess-Sensoren 5 und ihre Befestigungsschrauben 10 nicht in einer zur Rollenhauptachse 9 radialen Richtung angeordnet sind, sondern quer zur Rollenhauptachse versetzt sind. Die Messstellenbereiche 3 sind von einer oder mehreren mit der Rollenoberfläche adhäsiv verbundenen Metallfolien 11 abgedeckt. Bei einer Ausführungsform nach Fig. 1 sind die Messstellenbereiche 3 einzeln von jeweils einer einzigen Metallfolie 11 abgedeckt. Bei der Ausführungsform nach Fig. 4 sind mehrere Messstellenbereiche 3 gemeinsam von einer einzigen Metallfolie 11 abgedeckt, nämlich mittels eines quer über die Messrollenbreite verlaufenden Folienstreifens.

Die Metallfolien 11 bestehen aus Federstahl. Die Dicke der Metallfolien beträgt 10 µm bis 100 µm, vorzugsweise 50 µm. Die Metallfolie 11 bzw. -folien können mit der Rollenoberfläche verklebt oder verschweißt sein. Nach dem Ausführungsbeispiel weist die Planheitsmessrolle 1 eine Ummantelung 12 aus einem Hartmetall, z. B. Hartchrom oder Wolframcarbid auf.

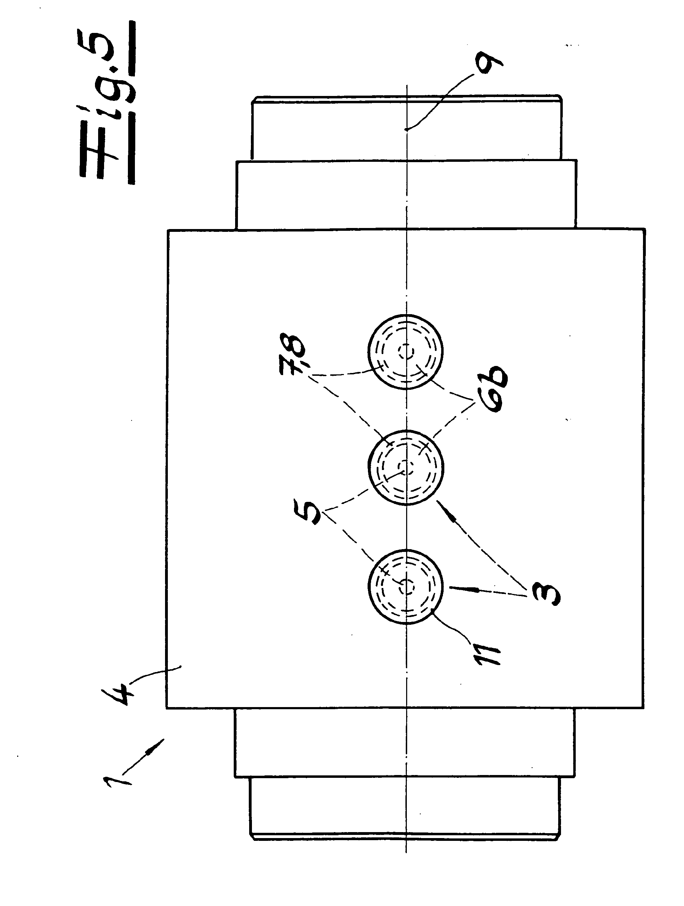

Bei der Ausführungsform nach Fig. 5 sind singuläre Messstellenbereiche 3 verwirklicht, bei denen die Kraftmess-Sensoren 5 in radialer Richtung auf die Rollenhauptachse 9 unter Bildung eines ringförmigen Bewegungsspaltes 7 auch für ihre Abdeckungen 6b ausgerichtet sind. Auch in diesem Fall können die Messstellenbereiche 3 einzeln von jeweils einer eigenen Metallfolie 11 oder mehrere Messstellenbereiche 3 gemeinsam von einer einzigen Metallfolie abgedeckt sein.

Bei den vorbeschriebenen Ausführungsformen ergibt sich die Lastverteilung über die Rollenbreite bei Bandbeaufschlagung als Reaktion der Zugspannungsverteilung über die Breite. Das machen die angedeuteten Kontaktflächen 13 zwischen dem Band 2 und den Messbalken 6a deutlich, die mit fortlaufendem Band über die Rollenbreite wandern. Die Breitenlage verändert sich, wenn die Planheitsmessrolle 1 sich dreht. Somit ergibt sich eine kontinuierliche Messung über die Rollenbreite.

## Patentansprüche

1. Planheitsmessrolle zur Ermittlung von Planheitsfehlern in Bändern, insbesondere Stahl- und Metallbändern, beim insbesondere Durchlaufen von Bandprozesslinien oder Walzwerken, mit unter Bildung von Messstellenbereichen in den Rollenmantel integrierten Kraftmess-Sensoren und mit der Rollenoberfläche fluchtenden Abdeckungen für die Kraftmess-Sensoren, wobei die Abdeckungen unter Bildung eines Bewegungsspiels gegen die Kraftmess-Sensoren von einem Bewegungsspalt umgeben sind, **dadurch gekennzeichnet, dass** die Messstellenbereiche (3) von einer oder mehreren mit der Rollenoberfläche adhäsiv verbundenen Metallfolien (11) abgedeckt sind.

2. Planheitsmessrolle nach Anspruch 1, **dadurch gekennzeichnet, dass** die Messstellenbereiche (3) einzeln von jeweils einer einzigen Metallfolie (11) abgedeckt sind.

3. Planheitsmessrolle nach Anspruch 1, **dadurch gekennzeichnet, dass** mehrere Messstellenbereiche (3) gemeinsam von einer einzigen Metallfolie (11) abgedeckt sind.

4. Planheitsmessrolle nach einem der Ansprüche 1 bis 3, **dadurch gekennzeichnet, dass** die Metallfolie (11) zum Abdecken von einem oder mehreren Messstellenbereichen (3) als Folienstreifen quer über die Messrollenbreite verläuft.

5. Planheitsmessrolle nach einem der Ansprüche 1 bis 4, **dadurch gekennzeichnet, dass** die Metallfolie (11) aus Federstahl besteht.

6. Planheitsmessrolle nach einem der Ansprüche 1 bis 5, **dadurch gekennzeichnet, dass** die Dicke der Metallfolie (11) 10 µm bis 100 µm, vorzugsweise 50 µm beträgt.

7. Planheitsmessrolle nach einem der Ansprüche 1 bis 6, **dadurch gekennzeichnet, dass** die Metallfolie bzw. -folien (11) mit der Rollenoberfläche verklebt ist bzw. sind.

8. Planheitsmessrolle nach einem der Ansprüche 1 bis 6, **dadurch gekennzeichnet, dass** die Metallfolien bzw. -folien (11) mit der Rollenoberfläche verschweißt ist bzw. sind.

9. Planheitsmessrolle nach einem der Ansprüche 1 bis 8, **dadurch gekennzeichnet, dass** die Messrolle (1) eine Ummantelung (12) aus Gummi oder Kunststoff, z. B. Polyurethan aufweist.

10. Planheitsmessrolle nach einem der Ansprüche 1 bis 8, **dadurch gekennzeichnet, dass** die Messrolle (1) eine Ummantelung (12) aus einem Hartmetall, z. B. Hartchrom oder Wolframcarbid aufweist.
